# EUROPEAN PATENT APPLICATION

(11) **EP 2 390 761 A1**
(43) Date of publication of application: **30.11.2011**
(21) Application number: 10163951.6
(22) Date of filing: 26.05.2010
(51) Int. Cl.: G06F 3/033, G06F 3/048, G06F 3/042

(54) **A method and system for selecting an item in a three dimensional space**

(71) Applicant: Advanced Digital Broadcast S.A., 1292 Chambesy (CH)
(72) Inventor: Kobzda, Piotr, 65-119, Poland (PL); Lazarski, Wojciech, 65-119, Poland (PL); Szajna, Tomasz, 65-119, Poland (PL)
(74) Representative: Pawlowski, Adam

(57) **Abstract**

A computer-implemented method for selecting an item in a three dimensional space (101), the method comprising the steps of positioning a virtual scene (110) comprising at least one item (111-113) in the three dimensional space (101), mapping the coordinate system of the virtual scene (110) and the coordinate system of the three dimensional space (101) to a common coordinate system, receiving a pointing input from an input device (220) located in the three dimensional space (101), converting the pointing input to a pointing vector (141-143) and determining the pointing vector (141-143) coordinates in the common coordinate system, determining items (111-113) of the virtual scene affected by the pointing vector (141-143), selecting an item from the affected items (111-113).

## Description

The present invention relates to a method and a system for selecting an item in a three dimensional space. Such method may be applied to two or three dimensional graphical user interfaces.

Computer-related interaction and input devices include keyboards, joysticks, mice, trackballs, smart pens, etc. One function of such pointers is to position a cursor at a desired location on the computer display or to interact with objects that are drawn on the display of the computer, or simply interact with the computer by commanding it to perform different actions depending on the input from the interaction device.

Input arrangements are known, which allow the user to point directly at an object displayed on a display. For example, touch-sensitive displays allow the user to touch a given portion of the display with the user's finger, thereby allowing selection of an item displayed at the touched portion of the display. Similar functionality can be also provided by remote controllers, so-called light guns, which allow pointing at a given portion of the display with a remote, gun-shaped device.

Moreover, gesture recognition systems are known, which allow recognition of user hand gestures. For example, a US patent application No. US2009/0296991 "Human interface electronic device" presents an apparatus configured to facilitate user gesture-based input, comprising sensors configured to capture positional information regarding gestures made by a user and a processor configured to provide signals to a host apparatus configured to be controlled by gestures made by the users. The gestures are translated into typical mouse or keyboard user interface actions, such as movements, clicks, etc.

The aim of the present invention is to improve selection of items in a three dimensional space. This aim is achieved by providing a method and system allowing detection of an input device in the three dimensional space and detection with interpretation of gestures in the three dimensional space.

The object of the invention is a computer-implemented method for selecting an item in a three dimensional space, the method comprising the steps of positioning a virtual scene comprising at least one item in the three dimensional space, mapping the coordinate system of the virtual scene and the coordinate system of the three dimensional space to a common coordinate system, receiving a pointing input from an input device located in the three dimensional space, converting the pointing input to a pointing vector and determining the pointing vector coordinates in the common coordinate system, determining items affected by the pointing vector, selecting an item from the affected items.

The virtual scene can be three dimensional.

The virtual scene may comprise items arranged such that the user perceives the items as arranged substantially horizontally.

The pointing input can be a pointing gesture convertible to a pointing vector.

The pointing device may comprise a source of light and the method may further comprise the steps of positioning in the three dimensional space at least two light sensors such that each light sensor allows for determining a direction from which light is emitted in the three dimensional space, determining sensor coordinates, the sensor coordinates identifying coordinates of the source of light within image data sensed by each of the at least two light sensors, determining emitter coordinates, the emitter coordinates identifying coordinates of the source of light in the three dimensional space based on placement of the at least two light sensors sensing the source of light and the sensor coordinates, tracking the source of light in order to read a performed gesture.

The pointing gesture can be a parabola, and the method may further comprise the step of approximating the parabola to a vector.

The method may further comprise the step of displaying the items of the virtual scene within the three dimensional space by a three dimensional display apparatus.

The affected items can be items having coordinates within a predetermined range from a pointing ray forming extension of the pointing vector and the item closest to the pointing ray can be selected.

The affected items can be items having coordinates within a predetermined range from a pointing ray forming extension of the pointing vector and the item closest to the vertex of the pointing vector can be selected.

The object of the invention is also a computer program comprising program code means for performing all the steps of the computer-implemented method of the invention, as well as a computer readable medium storing computer-executable instructions performing all the steps of the computer-implemented method of the invention.

Another object of the invention is a system for selecting an item in a three dimensional space, the system comprising a virtual scene generator configured to position a virtual scene comprising at least one item in the three dimensional space, a coordinate mapping unit configured to map the coordinate system of the virtual scene and the coordinate system of the three dimensional space to a common coordinate system, an input device interface configured to receive a pointing input from an input device located in the three dimensional space and to convert the pointing input to a pointing vector and determine the pointing vector coordinates in the common coordinate system, an item selector configured to determine items of the virtual scene affected by the pointing vector and selecting an item from the affected items.

The input device interface may comprise at least two light sensors and the input device may comprise a light source.

The light source can be wearable on a finger of a user of the system.

The virtual scene generator may comprise a three dimensional display apparatus configured to display the virtual scene in the three dimensional space.

The invention will be described with reference to a drawing, in which:
Fig. 1 presents a top view of a three dimensional space in which a virtual scene is positioned according to the invention;
Fig. 2 presents the structure of the system according to the invention;
Fig. 3 presents the method for selecting an item according to the invention; and
Fig. 4 shows the principles of selection of an item

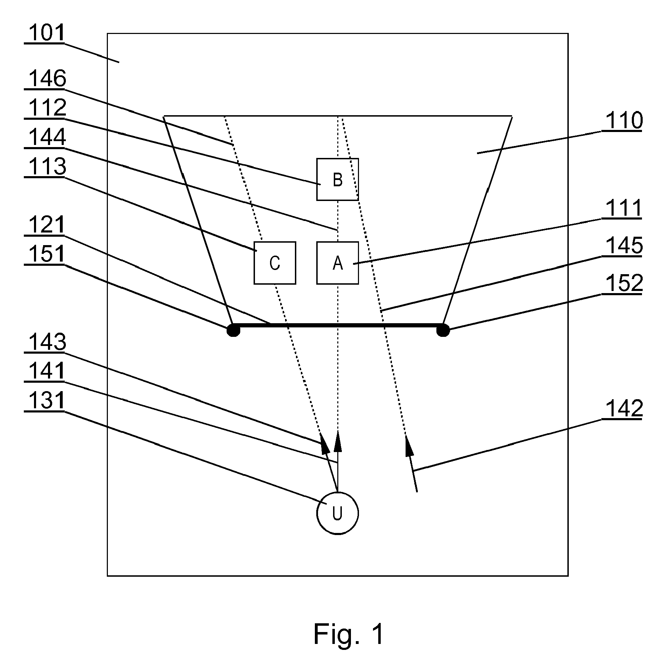

Fig. 1 presents a top view of a three dimensional space 101, also called a three dimensional environment, in which a virtual scene 110 is positioned according to the invention. The virtual scene 110 may be a computer-generated two-dimensional or a three-dimensional scene with virtual items. The virtual scene may be also a virtualized representation of the real three-dimensional space 101. The three-dimensional virtual scene 110 comprises at least one item 111-113. In case the virtual scene is a virtualized representation of the real three-dimensional space 101, the items 111-113 may represent real items present in the real space 101.

The virtual scene 110 is positioned in a particular region of the space 101. For example, if the virtual scene 110 is displayed by a stereoscopic video display, the front border of the virtual scene 110 may be defined by the position of the display screen 121 within the space 101, and the depth of the scene can be simulated to be located in the region of the space 101 behind and/or in front of the screen 121, thereby occupying a certain region 110 of the three dimensional space 101, for example a room in which the video display is located. Positioning of the virtual scene 110 in the space 101 can be executed by e.g. associating one of the points of the virtual scene 110 with a point of the space 101 and aligning the coordinate axes of the virtual scene 110 with the coordinate axes of the space 101.

The coordinate system of the virtual scene 110 is mapped with the coordinate system of the space 101 to a common coordinate system, which may involve scaling of the systems to the common system. When the virtual scene 110 is mapped with the space 101, each item 111-113 of the virtual scene 110 can be allocated in a particular region of the space 101.

The items are selectable by the user 131 via an input device manipulable by the user within the space 101. The input device may comprise a device directly manipulable by the user, such as a remote controller to be held in the hand of the user. Alternatively, the input device may comprise a camera observing movement of a part of user's body, such as movement of user's hand - in such a case the user's hand acts as a pointing device located in the three dimensional space. In case the virtual scene 110 is displayed by a video display 121, the user may select the items 111-113 while standing in front of the scene 110 and performing pointing input, for example pointing gestures, with an input device towards the items 111-113. The pointing gestures are converted to pointing vectors 141-143. The pointing vectors 141-143 have associated pointing rays 144-146, which form extension of the pointing vectors 141-143. As shown in Fig. 1, the pointing vector 141 and its pointing ray 144 point at items A 111 and C 112. The pointing vector 142 and its pointing ray 145 point at item B 112. The pointing vector 143 and its pointing ray 146 point at item C 113. Therefore, in order to unambiguously select item B 112, the user should make a pointing gesture with the pointing device held in a hand extended to the right, so as to bypass item A 111 with the pointing ray 145.

The gestures made by the user may be detected by an input device interface, which may comprise two light sensors 151, 152 located at the boundary of the display 121, wherein the input device comprises a light source.

Therefore, the system allows the user to select various items of the virtual scene 110 by performing pointing gestures towards the items, wherein the direction of the pointing vector defined by the gesture and its extension forming a pointing ray define one or more items desirable to be selected by the user.

It is preferable that the set of items, from which an item is to be selected by the user, is arranged with greater density in a horizontal direction than in the vertical direction, preferably such that the user perceives the items as arranged substantially horizontally. A user can more precisely point on a horizontal axis than on a vertical axis, due to the fact that during movement of a hand, especially movement which starts with a palm at a hip of the user and then extends towards the screen, people find it easier to point accurately in the horizontal direction than in the vertical direction, as the palm has a natural tendency to rise upwards during such movement.

By positioning the virtual scene 110 in a three dimensional space 101 and allowing the user to use an input device manipulable in the three dimensional space 101, wherein the three dimensional space 101 and the virtual scene 110 are mapped to a common coordinate system, the method and system according to the invention allow selection of items in a three dimensional space, which was not possible by the previously known systems, aimed at pointing at two dimensional scenes only or analyzing gestures without mapping the gestures to the items of a virtual scene.

It will be well understood that the principles of Fig. 1 showing the top view of the three dimensional space 101 apply to other views of the three dimensional space, in particular the side view.

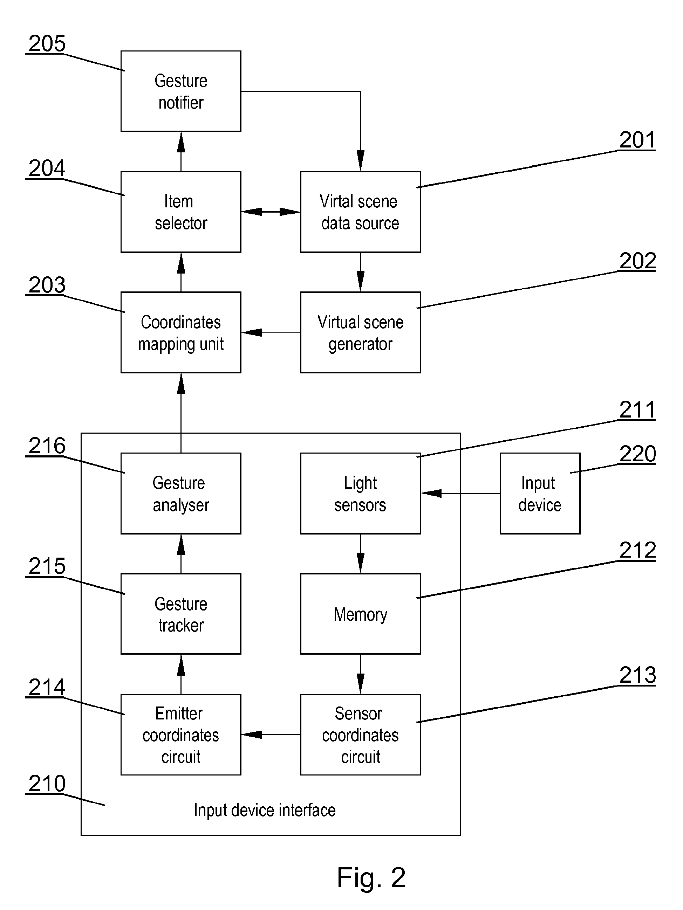

Fig. 2 presents the structure of the system according to the invention. The system comprises a virtual scene data source 201, which provides data on items 111-113 comprised in the virtual scene 110. The data source 201 may be a video signal source, for example a video disc or a television broadcast signal. The data source 201 may also be a virtualizer configured to convert the items detected in the real space in which the system is placed to virtual items, such as to create an augmented reality scene, in which the virtual scene 110 represents the real three dimensional space in which the system is positioned, and therefore the virtual items represent the real items. The data from the virtual scene data source 201 are input to a virtual scene generator 202, which is configured to position the virtual scene 110 in the three dimensional space 101. The generator 202 may comprise a three dimensional display apparatus, such as a stereoscopic image generating apparatus, such as a stereoscopic display or projector. However, in case the virtual scene 110 is a virtualization of a real environment, the generator 202 may position the scene only within the internal memory components of the system, without making it visible to the user.

A coordinate mapping unit 203 is configured to map the coordinate system of the virtual scene 110 and the coordinate system of the three dimensional space 101 in which the scene 110 is positioned to a common coordinate system. The common coordinate system may be the same as the coordinate system of the three dimensional space 101 or another system. The procedure of coordinate mapping may involve scaling of coordinates, possibly involving different scale factors, linear or non-linear, for different coordinates, in order to properly position the virtual scene 110 in the space 101. For example, in case the virtual scene presents a landscape view of an area, the x and y coordinates may be mapped with linear scaling to the coordinates of the real space 101 in which the scene is displayed, while the depth coordinate of the scene may be mapped using a non-linear coefficient, for the scene to be mapped to a certain area behind the display screen, e.g. an area having a depth equal to the width of the screen 121, as shown in Fig. 1.

An input device interface 210 is configured to receive a pointing input from the input device 220 located in the three dimensional space 101 and to convert the pointing input to a pointing vector with coordinates in the common coordinate system.

In a preferable embodiment, the input device interface 210 comprises at least two light sensors 211, indicated by references 151 and 152 on Fig. 1, while the input device comprises a source of light with which the user may perform specific gestures, the gestures constituting a pointing input. The sensors are preferably located near different corners of the screen 121. The light sensors 211 provide images data indicating the position of the source of light, which are stored in a memory 212, which is also used for storing any results of subsequent data processing of the input device interface elements. The light sensors 211 may be CCD sensors that report different pixels in a data image depending on a position of the light source. The memory 212 may also store computer software for controlling and executing the method of operation of the input device interface 210. A sensor coordinates circuit 213 is responsible for determining sensor coordinates, the sensor coordinates identifying coordinates of the source of light within the image data sensed by each of the at least two light sensors 211. The sensor coordinates may be temporarily stored in the memory 212 if necessary. An emitter coordinates circuit 214 is responsible for carrying out a task of determining emitter coordinates, the emitter coordinates identifying coordinates of the input device 220, such as a source of light, in the three dimensional space 101 based on placement of the at least two light sensors sensing the source of light and the sensor coordinates. This can be done using algorithms known to the persons skilled in the art of three dimensional image processing. The emitter coordinates may be temporarily stored in the memory 212 if necessary. A gesture tracker 215 is responsible for tracking the source of light in order to read a performed gesture, thereby determining a plurality of emitter coordinates. The plurality of coordinates are related in time and can be viewed as a series of subsequent measurements. A gesture analyzer 216 performs the task of analyzing the gesture in order to convert it into the pointing vector and passing the pointing vector to the item selector 204, possibly via the coordinate mapping unit 203 in order to map the vector coordinates to the common coordinate system, if necessary. A series of gestures can be made available to the system in a calibration procedure. The gestures definitions may be programmed in the memory 212 and be subsequently compared to the tracked gesture.

The input device may be any device via which the user may provide a pointing input to the system.

For example, it can have a form of an elongated pointer, the one end of which determines the start of the pointing vector and the other end of which determines the end of the pointing vector.

Alternatively, the input device may be a single-point device which is moved by the user to perform a gesture. The device may be a remote controller, a digital phone, a palmtop or any other hand-held device comprising a light source. Preferably, the input device is wearable on a finger of a user of the system and has a form of a ring, a thimble or a glove.

The term "light" is to be understood as any type of electromagnetic radiation, including but not limited to visible light, infrared light, RF waves, acoustic waves etc.

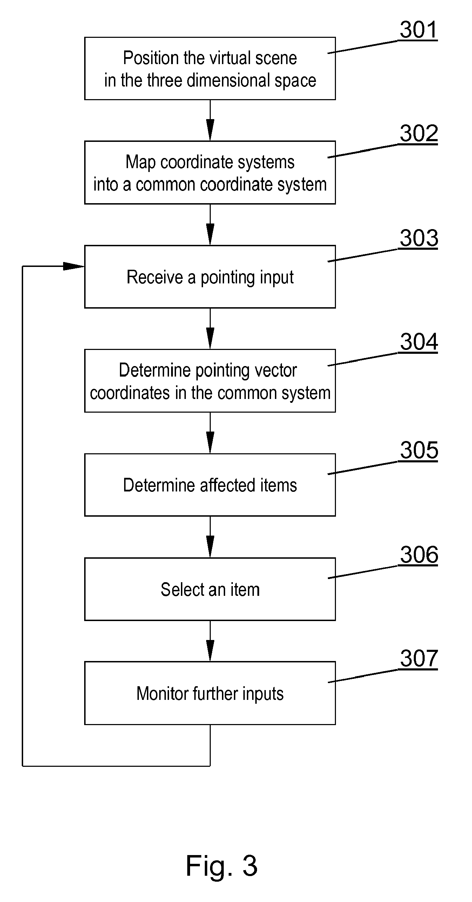

The item selector 204 is configured to determine items 111-113 of the virtual scene 110 affected by the pointing vector and to select an item 111-113 from the affected items, according to the procedure shown in Fig. 3. Preferably, the affected items are items having coordinates within a predetermined range from a pointing ray 144-146 forming extension of the pointing vector 141-143.

The system may further comprise a gesture notifier 205 for notifying the selected item 111-113 that a gesture affecting the item has been detected, in case the item accepts gesture input. In case the system accepts a plurality of gesture types, the type of gesture may be communicated to the item as well. For example, the type of gesture may be determined depending on the length of the pointing vector, the speed of generating the pointing vector, the parameters of the light source selectable by the user etc. In practice a typical application will be to send a triggering event to a software object representing the item. The item object will then respond according to its programmed functions.

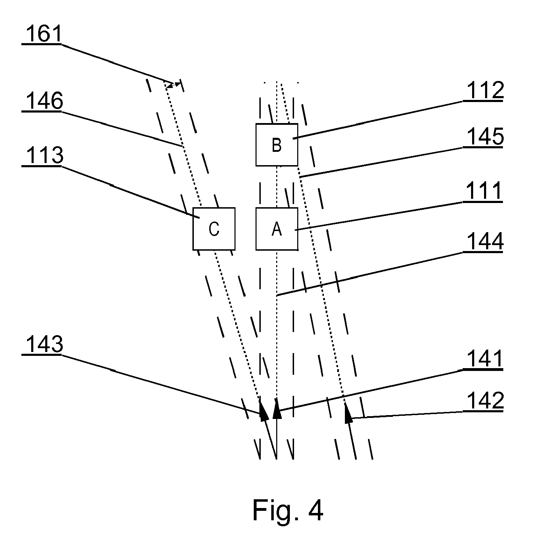

Fig. 3 presents the method for selecting an item according to the invention. In the initial phase, in step 301, the virtual scene 110 is positioned in the three dimensional space 101. Next, in step 302 the coordinate system of the virtual scene and the coordinate system of the three dimensional space 101 are mapped to a common coordinate system. Such setup allows for reception of user gestures. Then, in step 303, a pointing input is received from an input device 220. Next, in step 304, the pointing input is converted to a pointing vector and the pointing vector coordinates are determined in the common coordinate system. The conversion of the pointing input to a pointing vector may involve analysis of gestures made by the user with the input device. The gestures, for example in form of a straight line or a parabola can be approximated to a pointing vector. In step 305 one or more affected items of the virtual scene are determined, as shown in details in Fig. 4. Preferably, the affected items are items having coordinates within a predetermined range from a pointing ray forming extension of the pointing vector. Then, one item is selected from the affected items in step 306 and the procedure returns to monitoring further user inputs in step 307.

Fig. 4 shows the principles of selection of an item 111-113 from the affected items, having coordinates within a predetermined range 161 from a pointing ray 144-146 forming extension of the pointing vector 141-143. The small-dashed rays represent pointing rays, while the large-dashed rays represent the range of each pointing ray. A pointing vector 143 is extended by a pointing ray 146, which has only one item C 113 within the range. Therefore, only the item C 113 will be determined as affected in step 305 of the procedure and selected in step 306. A pointing vector 141 is extended by a pointing ray 144, which has two items: A 111 and B 112 within the range and these two items will be determined as affected in step 305 of the procedure. Since both items are within the same proximity to the ray, the item A 111 may be selected in step 306 of the procedure as the closer to the vertex of the pointing vector. A pointing vector 142 is extended by a pointing ray 145, which has two items: A 111 and B 112 within the range and these two items will be determined as affected in step 305 of the procedure. Since the item B 112 is in a closer proximity to the pointing ray 145 than item A 111, then the item B 112 may be selected in step 306 of the procedure. The range 161 may be predetermined upon calibration of the system, depending on the accuracy of the input device, the skill of the user or the number of selectable items on the screen (the less items, the higher range, in order to facilitate selection). In case no items are detected within the predetermined range of the pointing ray, the item closest to the ray or to the vertex of the pointing vector can be selected. Alternatively, the system in a simple embodiment may work with the range defined as infinite - in such a case all items of the virtual scene will be determined as affected, i.e. having coordinates within the predetermined range from a pointing ray, and an item closest to the ray or to the vertex of the pointing vector will be selected.

It can be easily recognized, by one skilled in the art, that the aforementioned method for selection of items in a three dimensional space may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. The remote controller or the operated target device i.e. tv set, set top box according to the present invention, optionally comprises such a memory. These memories are exemplary recording media for storing computer programs comprising computer-executable instructions performing all the steps of the computer-implemented method according the technical concept presented herein.

The present invention may be implemented using any display, for example on a computer monitor, a television display, a stereoscopic projector.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A computer-implemented method for selecting an item in a three dimensional space (101), the method comprising the steps of:
- positioning a virtual scene (110) comprising at least one item (111-113) in the three dimensional space (101),
- mapping the coordinate system of the virtual scene (110) and the coordinate system of the three dimensional space (101) to a common coordinate system,
- receiving a pointing input from an input device (220) located in the three dimensional space (101),
- converting the pointing input to a pointing vector (141-143) and determining the pointing vector (141-143) coordinates in the common coordinate system,
- determining items (111-113) of the virtual scene affected by the pointing vector (141-143),
- selecting an item from the affected items (111-113).

2. The method according to claim 1, wherein the virtual scene (110) is three dimensional.

3. The method according to claim 1, wherein the virtual scene (110) comprises items (111-113) arranged such that the user perceives the items as arranged substantially horizontally.

4. The method according to claim 1, wherein the pointing input is a pointing gesture convertible to a pointing vector (141-143).

5. The method according to claim 4, wherein the pointing device comprises a source of light and the method further comprises the steps of:
- positioning in the three dimensional space (101) at least two light sensors (151, 152) such that each light sensor (151, 152) allows for determining a direction from which light is emitted in the three dimensional space (101),
- determining sensor coordinates, the sensor coordinates identifying coordinates of the source of light within image data sensed by each of the at least two light sensors (151, 152),
- determining emitter coordinates, the emitter coordinates identifying coordinates of the source of light in the three dimensional space (101) based on
o placement of the at least two light sensors (151, 152) sensing the source of light and
o the sensor coordinates,
- tracking the source of light in order to read a performed gesture.

6. The method according to claim 4, wherein the pointing gesture is a parabola, further comprising the step of approximating the parabola to a vector (141-143).

7. The method according to claim 1, further comprising the step of displaying the items (111-113) of the virtual scene (110) within the three dimensional space (101) by a three dimensional display apparatus (121).

8. The method according to claim 1, wherein the affected items (111-113) are items having coordinates within a predetermined range from a pointing ray (144-146) forming extension of the pointing vector (141-143) and wherein the item (111-113) closest to the pointing ray (144-146) is selected.

9. The method according to claim 1, wherein the affected items (111-113) are items having coordinates within a predetermined range from a pointing ray (144-146) forming extension of the pointing vector (141-143) and wherein the item (111-113) closest to the vertex of the pointing vector (141-143) is selected.

10. A computer program comprising program code means for performing all the steps of the computer-implemented method as claimed in any of claims 1 to 9 when said program is run on a computer.

11. A computer readable medium storing computer-executable instructions performing all the steps of the computer-implemented method according to any of claims 1 to 9 when executed on a computer.

12. A system for selecting an item (111-113) in a three dimensional space (101), the system comprising:
- a virtual scene generator (202) configured to position a virtual scene (110) comprising at least one item (111-113) in the three dimensional space (101),
- a coordinate mapping unit (203) configured to map the coordinate system of the virtual scene (110) and the coordinate system of the three dimensional space (101) to a common coordinate system,
- an input device interface (210) configured to receive a pointing input from an input device (220) located in the three dimensional space (101) and to convert the pointing input to a pointing vector (141-143) and determine the pointing vector coordinates in the common coordinate system,
- an item selector (204) configured to determine items (111-113) of the virtual scene (110) affected by the pointing vector (141-143) and selecting an item from the affected items (111-113).

13. The system according to claim 12, wherein the input device interface (210) comprises at least two light sensors (151, 152) and the input device (220) comprises a light source (210).

14. The system according to claim 13, wherein the light source (220) is wearable on a finger of a user of the system.

15. The system according to claim 12, wherein the virtual scene generator (202) comprises a three dimensional display apparatus (121) configured to display the virtual scene (110) in the three dimensional space (101).
